# EUROPÄISCHE PATENTSCHRIFT

(11) **EP 3 324 084 B1**
(45) Veröffentlichungstag und Bekanntmachung des Hinweises auf die Patenterteilung: **18.11.2020**
(21) Anmeldenummer: 17202807.8
(22) Anmeldetag: 21.11.2017
(51) Int. Cl.: F16K 7/12, F16K 25/00

(54) **MEMBRANVENTIL**
MEMBRANE VALVE
SOUPAPE À MEMBRANE

(30) Priorität: 21.11.2016 DE 102016122302
(43) Veröffentlichungstag der Anmeldung: 23.05.2018
(73) Patentinhaber: SISTO Armaturen S.A., 6468 Echternach (LU)
(72) Erfinder: Hackenberger, Bernd, 6468 Echternach (LU)
(74) Vertreter: Busch, Tobias

(56) Entgegenhaltungen:
- AU-A- 1 669 870
- DE-A1- 2 307 580
- DE-A1- 3 447 329
- DE-A1- 19 505 747
- DE-A1-102014 013 512
- JP-A- 2003 226 028
- JP-A- 2005 133 767
- US-A- 5 127 625
- US-A1- 2002 135 646
- US-A1- 2004 099 311

## Beschreibung

Die Erfindung betrifft ein Membranventil mit einer Membran, die Räume voneinander dichtend trennt, wobei die Membran zwischen Gehäuseteilen angeordnet ist.

Membranventile können zur Dosierung von unterschiedlichen Fluiden eingesetzt werden, beispielsweise von Gasen, Dämpfen oder Flüssigkeiten. Beispielsweise können Membranventile eingesetzt werden, um hochviskose bzw. sehr stark haftfähige Medien zu dosieren bzw. zu verteilen. Bei Membranventilen wird dabei wirksam eine Ablagerung und somit auch eine Kontamination verhindert. Ventile auf Basis des Membranprinzips sind die totraumärmsten Dosierarmaturen. Neben dem sehr geringen Totraumvolumen sind Membranventile zudem entleerungsoptimiert konstruiert, sodass eine rückstandsfreie Entfernung des Mediums ermöglicht wird.

Dies ist insbesondere bei pharmazeutischen Anlagen und Fertigungsprozessen von großer Bedeutung, da diese den hohen Ansprüchen einer strengen Validierung unterliegen, mit dem Ziel, eine gleichbleibende und reproduzierbare Qualität zu gewährleisten. Aus diesen Ansprüchen resultiert die Notwendigkeit, verschiedene Prozesse innerhalb einer Anlage fahren zu können. Neben dem eigentlichen Produktionsprozess sind dies in der Regel die Reinigung, Desinfektion und Sterilisation der Anlage. Membranventile haben sich aufgrund ihrer vorteilhaften Konstruktionsmerkmale als bevorzugte Armatur in der sterilen Prozesstechnik etabliert.

Die eingesetzten Membranen bilden bewegliche, dichtende Wände, die zwei Räume mit in der Regel unterschiedlichen Medien (Gase, Flüssigkeiten) und häufig auch unterschiedlichen Druckverhältnissen voneinander trennen.

Ein wichtiges Qualitätsmerkmal einer Membran ist deren Beweglichkeit, das heißt die Fähigkeit senkrecht zur Einspannfläche (Membranfläche) einen Hub auszuführen, der mechanisch angetrieben bedingt sein kann. Weiterhin ist die Beständigkeit der Membran von Bedeutung, insbesondere wenn aggressive Medien gefördert werden.

Die Bewegungsfähigkeit und Beständigkeit einer Membran hängt im Wesentlichen vom Werkstoff ab, aus dem die Membran besteht. Als Grundwerkstoffe für Membranen werden hauptsächlich Elastomere verwendet, die zur Erzielung einer höheren Festigkeit mit Gewebeeinlagen verstärkt werden können. Als Elastomere haben sich Membranen mit Ethylen-Propylen-Dien-Kautschuk (EPDM) bewährt. Bei Ethylen-Propylen-Dien-Kautschuk (EPDM) handelt es sich um terpolymere Elastomere (Gummi) und somit um synthetische Kautschuke. Das Material zeichnet sich durch eine hohe Elastizität und gute chemische Beständigkeit aus.

In der DE 195 05 747 A1 wird ein Membranventil beschrieben, welches aus einem Gehäuse besteht, das ein Gehäuseoberteil und ein Gehäuseunterteil aufweist. Zwischen den beiden Gehäuseteilen ist eine Membran eingespannt, die einen Randwulst besitzt. Mithilfe einer außerhalb des Randwulstes gelegenen Verschraubung ist die Membran in einer Kammer eingespannt, die durch das Gehäuseoberteil und das Gehäuseunterteil gebildet wird. An den Randwulst ist ein außenliegender lappenartiger Fortsatz angeformt. Der lappenartige Fortsatz ist zwischen den entsprechenden Stirnflächen des Gehäuseoberteils und des Gehäuseunterteils angeordnet.

Die US 2002/0135646 A1 zeigt eine Membran mit einem Loch, die beidseitig von einem Medium umspült werden kann.

Die JP 2003 226028 zeigt eine Membran aus unterschiedlichen Werkstoffen.

Die DE 34 47 329 A1 zeigt ein Membranventil aus Schichten unterschiedlicher Werkstoffe.

Die US 2004/0099311 A1 zeigt ein Mehrwegeventil mit einer Feder.

Der Einspannbereich einer Ventilmembran ist besonderen Anforderungen unterworfen. In erster Linie dient er der Halterung der Membran, deren Randbereich während des Schließens und in der Schließstellung einen radial nach innen gerichteten Zug ausgesetzt ist. Falls keine zusätzliche Abdichtung zwischen dem Unterteil und dem Oberteil des Gehäuses vorgesehen wird, kann der zwischen den Gehäuseteilen eingespannte Rand auch auf die Aufgabe der ruhenden Abdichtung übernehmen.

Die auf den Einspannbereich der Membran ausgeübte Dauerbeanspruchung führt, vor allem bei einem flachen Membranrand, oftmals zu einer gestaltlichen Veränderung, die schließlich zu einer Undichtigkeit des Gehäuses im betroffenen Bereich führen kann. Ein rechtzeitiges Nachspannen der den Membranrand beaufschlagenden Verschraubung vermag zwar den Zeitpunkt zu verschieben, an dem eine solche Undichtigkeit auftritt, sie kann den hierfür ursächlichen Prozess aber nicht aufhalten.

Bei Membranen, die einen zwischen den Gehäuseteilen eingespannten Randwulst besitzen, ist die geschilderte Problematik nicht oder nur im geringen Maße gegeben. Die auf den Randwulst ausgeübten Flächenpressung muss nicht so hoch sein wie bei einem flachen Rand, da der großräumige Wulst sich der ihm aufnehmenden Kammer anpasst, sodass eine gute Abdichtung sichergestellt ist. Die Kammerung des Einspannbereiches stellt eine dauerhafte Halterung sicher.

Die an sich vorteilhafte Kammerung des Randwulstes birgt jedoch ein Problem in sich, das seine Ursache in einer nicht auszuschließenden unsachgemäßen Montage oder Wartung hat. Wird nämlich das von dem Hersteller eines solchen Membranventils vorgeschriebene Anzugsdrehmoment der Verschraubung um ein erhebliches Maß überschritten, so erfolgt eine radial nach innen gerichtete Verdrängung eines Teils des Membranmaterials des Randwulstes. An der rundum verlaufenden die Kammer begrenzenden Engstelle, die durch die beiden Gehäuseteile gebildet wird, ergibt sich so eine Materialanhäufung, die vor allem während der Membranbetätigung zu Spannungen in diesem und im benachbarten Membranbereich führt. Diese Spannungen können zu einem Einreißen der Membranoberfläche und zumindest bei Membranen ohne Faserverstärkung schließlich zu einem Membranbruch führen.

Um ein über ein vorgeschriebenes Maß hinausgehendes Anziehen der Verschraubung zu vermeiden, könnten der Randwulst, die diesen aufnehmende Kammer und die Stirnflächen von Gehäuseunter- und -oberteil so gestaltet und bemessen werden, dass die maximal zulässige Pressung des Randwulstes erreicht wäre, wenn die Stirnflächen der Gehäuseteile zur Anlage aneinander kämen. Dies würde aber wegen der notwendigen Präzision einen hohen Aufwand bei der Fertigung der Membranen und der Gehäuseteile und möglicherweise zusätzlicher Anpassungsarbeiten notwendig machen.

Aufgabe der Erfindung ist es, ein Membranventil bereitzustellen, bei dem eine Fehlmontage der Membran durch zu starkes Anziehen und damit eine zu starke Verpressung verhindert wird. Das Membranventil soll sich durch eine preiswerte Herstellungsweise und eine hohe Lebensdauer auszeichnen. Zudem soll das Membranventil möglichst wartungsfrei sein und eine hohe Dichtigkeit gewährleisten. Weiterhin soll sich das Membranventil durch ein möglichst geringes Totvolumen und eine gute Reinigungsfähigkeit auszeichnen, sodass insbesondere die Anforderungen für einen hochsterilen Einsatz erfüllt werden.

Diese Aufgabe wird erfindungsgemäß durch ein Membranventil mit den Merkmalen des Anspruchs 1 gelöst. Bevorzugte Ausführungsformen sind der Beschreibung, den Zeichnungen und den Unteransprüchen zu entnehmen.

Erfindungsgemäß umfasst das Membranventil eine Membran, die einen inneren Bereich aufweist, an den sich ein äußerer Bereich anschließt, der eine höhere Härte aufweist. Die Shore-Härte ist eine Kennzahl, die vorwiegend für Polymere eingesetzt wird. Sie steht in direkter Beziehung zur Eindringtiefe und ist somit ein Maß für die Werkstoffhärte. Nach DIN 53505 unterscheidet man zwischen den Verfahren Shore A, C und D. Als Eindringkörper (Indenter) wird häufig ein federbelasteter Stift aus gehärtetem Stahl verwendet. Bei diesem Verfahren wird der jeweilige Indenter mit der Federkraft in den Prüfkörper gedrückt und die Eindringtiefe stellt somit ein Maß für die Shore-Härte dar. Dadurch wirkt der äußere Bereich als Stützbereich. Dieser äußere Stützbereich kann die Funktion eines Distanzelements übernehmen. Dadurch wird eine Fehlmontage der Membran durch zu starkes Anziehen und damit eine zu starke Verpressung verhindert. Vorzugsweise weist der innere Bereich eine Härte nach Shore-A auf, wobei es sich als günstig erweist, wenn die Härte des inneren Bereichs bei Shore-A zwischen 50 und 90 liegt.

Der äußere Bereich weist vorzugsweise eine Härte nach Shore-D auf, wobei es sich als günstig erweist, wenn die Härte des äußeren Bereichs bei Shore-D größer als 50 liegt. Bei einer besonders vorteilhaften Variante der Erfindung weist der innere Bereich ein Elastizitätsmodul von weniger als 45 MPa, vorzugsweise weniger als 35 MPa, insbesondere weniger als 25 MPa auf.

Bei einer günstigen Ausführung der Erfindung weist der äußere Bereich ein Elastizitätsmodul von mehr als 300 MPa, vorzugsweise mehr als 400 MPa, insbesondere mehr als 500 MPa auf.

Der innere Bereich der Membran besteht aus einem elastomeren Werkstoff. Vorzugsweise aus Ethylen-Propylen-Dien-Kautschuk (EPDM). Bei einer Variante der Erfindung kann der innere Bereich eine Gewebeeinlage aufweisen. Beispielsweise kann der innere Bereich aus zwei Elastomerlagen bestehen, zwischen denen eine Gewebeeinlage angeordnet ist. Die Gewebeeinlagen verstärken den inneren Bereich der Membran.

Der äußere Bereich der Membran besteht aus einem thermoplastischen und/oder duroplastischen Werkstoff. Bei Thermoplasten, die manchmal auch als Plastomere bezeichnet werden, handelt es sich um Kunststoffe, die sich in einem bestimmten Temperaturbereich verformen lassen. Bei einer besonders günstigen Ausführung der Erfindung besteht der äußere Bereich der Membran aus einem Duroplast. Duroplaste sind Kunststoffe, die nach ihrer Aushärtung nicht mehr verformt werden können. Es handelt sich dabei meist um relativ harte, glasartige Polymerwerkstoffe, die über chemische Hauptvalenzverbindungen dreidimensional fest vernetzt sind. Üblicherweise können Duroplaste ebenso wie Elastomere aufgrund ihrer Vernetzung nicht ausgeschmolzen werden und zerfallen nach Überschreiten der Zersetzungstemperatur (Pyrolyse). Als Duroplaste können beispielsweise Aminoplaste oder Phenoplaste eingesetzt werden. Auch der Einsatz von Epoxidharzen bzw. vernetzten Polyacrylaten zur Fertigung des äußeren Bereichs der Membran ist denkbar.

Durch den Einsatz dieser Werkstoffe wird bei einer bevorzugten Variante der Erfindung eine Identifizierung der Membran durch eine Einfärbung des äußeren Bereichs bewirkt. Die erfinderische Gestaltung des äußeren Bereichs der Membran aus einem Thermoplast oder einem Duroplast vereinfacht eine farbliche Identifizierung der Membran, da Thermoplaste oder Duroplaste gut einfärbbar sind und die Farbe keinen Einfluss auf die Bewegungseigenschaften und Dichtungseigenschaften der Membran hat.

Die erfindungsgemäße Komposit-Membran ermöglicht gegenüber herkömmlichen Membranen eine Veränderung des Kraftflusses beim Einspannen der Membran zwischen zwei Gehäuseteilen. Durch die Gestaltung des äußeren Bereichs der Komposit-Membran aus einem härteren Werkstoff wird die Dichtung in einen Kraftnebenschluss verlegt. In einer besonders günstigen Ausführung der Erfindung überträgt der äußere Bereich der Membran dabei mehr als 60 %, vorzugsweise mehr als 70 %, insbesondere mehr als 80 % der Kräfte zwischen den Verbindungselementen der Gehäuseteile, welche die Membran einspannen. Bei den Verbindungselementen kann es sich beispielsweise um Schrauben handeln. Diese Änderung des Kraftflusses wird durch die erfindungsgemäße Gestaltung des äußeren Bereichs der Membran bewirkt, der aufgrund seiner höheren Härte als Stützring wirkt. Die erfindungsgemäße Komposit-Membran ermöglicht es, dass der innere Bereich ausschließlich die Bewegungsfunktion und die Abdichtung gegenüber dem Ventildurchgang übernimmt. Dagegen übernimmt der innere Bereich beim Einspannen der Membran zwischen den Gehäuseteilen nur einen geringeren Teil der Schraubenkraft.

Vorzugsweise schließt sich der äußere Bereich unmittelbar an den inneren Bereich an. Bei einer besonders günstigen Variante der Erfindung sind der innere und der äußere Bereich miteinander verbunden und bilden eine Einheit. Die Verbindung der beiden unterschiedlichen Materialien kann beispielsweise über eine Verklebung des inneren mit dem äußeren Bereich erfolgen. Daher wird eine nicht-lösbare Verbindung zwischen dem äußeren und dem inneren Bereich geschaffen, sodass ein einheitliches Membranelement entsteht. Vorzugsweise handelt es sich bei der Verbindung zwischen dem äußeren und dem inneren Bereich der Membran um ein stoffschlüssiges Fügeverfahren. Beispielsweise können die beiden Bereiche durch einen Klebstoff stoffschlüssig verbunden werden.

Die Verbindungsflächen zwischen dem inneren und dem äußeren Bereich können beispielsweise senkrecht zu den Stirnflächen der beiden Gehäuseteile verlaufen zwischen denen die Membran eingespannt ist. Bei einer besonders günstigen Variante der Erfindung grenzen der innere und der äußere Bereich über Schrägflächen aneinander. Diese Flächen sind somit nicht senkrecht, sondern schräg zu den Stirnflächen der bindenden Gehäuseteile ausgerichtet. Vorzugsweise verläuft dabei die Schrägstellung in Richtung des Ventilsitzes.

Der äußere und der innere Bereich der Membran können auch über Flächen verbunden sein, die parallel zu den Stirnflächen der verbindenden Gehäuseteile verlaufen.

Die Membran weist ein federndes Element auf. Das federnde Element ist in einem Raum angeordnet. Dabei erweist es sich als günstig, wenn sich der Raum zwischen dem ersten und dem zweiten Bereich befindet bzw. der Raum zumindest teilweise von Wänden des ersten Bereichs bzw. und/oder Wänden des zweiten Bereichs begrenzt wird. Bei dem federnden Element kann es sich beispielsweise um eine Membranfeder oder einen elastischen Körper handeln. Die Erfindung umfasst auch Varianten, bei denen das federnde Element ausschließlich im inneren Bereich oder im äußeren Bereich angeordnet ist. Es gibt auch Varianten, bei denen mehrere federnde Elemente zum Einsatz kommen. Vorzugsweise handelt es sich bei den federnden Elementen um ringförmig ausgebildete Elemente, die entlang des äußeren Dichtbereichs der Membran wirken. Die federnden Elemente bewirken ein Nachspannen der Elastomerdichtung. Durch die erfindungsgemäße Kombination einer Komposit-Membran mit einem inneren und einem äußeren Bereich und gleichzeitig eingebauten Federelementen wird eine Anordnung geschaffen, die eine hohe Dichtigkeit und eine lange Lebensdauer aufweist. Bei diesem erfindungsgemäßen Membranventil werden Fehlmontagen wirksam verhindert und gleichzeitig wird eine hohe Zuverlässigkeit gewährleistet. Die Kräfte des federnden Elementes wirken senkrecht zu den Stirnflächen der Gehäuseteile zwischen denen die Membran eingespannt ist.

Bei einer besonders günstigen Variante der Erfindung weist die Komposit-Membran zudem eine umlaufende Dichtlippe auf.

Die Komposit-Membran kann gekammert oder flach ausgebildet sein. Insbesondere bei einer gekammerten Variante erweist es sich als günstig, wenn die erfindungsgemäße Komposit-Membran einen Randwulst aufweist.

Bei einer vorteilhaften Ausführung der Erfindung weist die Komposit-Membran ergänzend oder alternativ eine Durchgangs-Dichtlippe auf, die mit dem Sitz des Membranventils zusammenwirkt. Als besonders günstig erweist es sich, wenn der innere Bereich der Membran eine kreisförmige Ausgestaltung aufweist. Die Durchgangs-Dichtlippe kann dabei als Gerade ausgebildet sein, die durch den Mittelpunkt des Kreises verläuft. Vorzugsweise ist der innere, mittlere Bereich der Membran gewölbt ausgebildet.

Der äußere Bereich schließt sich unmittelbar an den kreisförmigen mittleren Bereich an, wobei die Außenkonturen des äußeren Bereichs der Membran vorzugsweise als gerade Kanten ausgebildet sind, sodass sie in besonders günstiger Weise zwischen den beiden Gehäuseteilen zum Einspannen wirken. Dabei erweist es sich als vorteilhaft, wenn der äußere Bereich der Membran Ausnehmungen für die Schrauben aufweist, mit denen die Membran zwischen den beiden Gehäuseteilen verspannt wird.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung eines Membranventils,
- Figur 2: eine Draufsicht auf eine gekammerte Membran,
- Figur 3: eine Hälfte einer Schnittdarstellung einer gekammerten Membran,
- Figur 4: eine Draufsicht auf eine flache Membran,
- Figur 5: eine Hälfte eines Schnitts durch eine flache Membran.

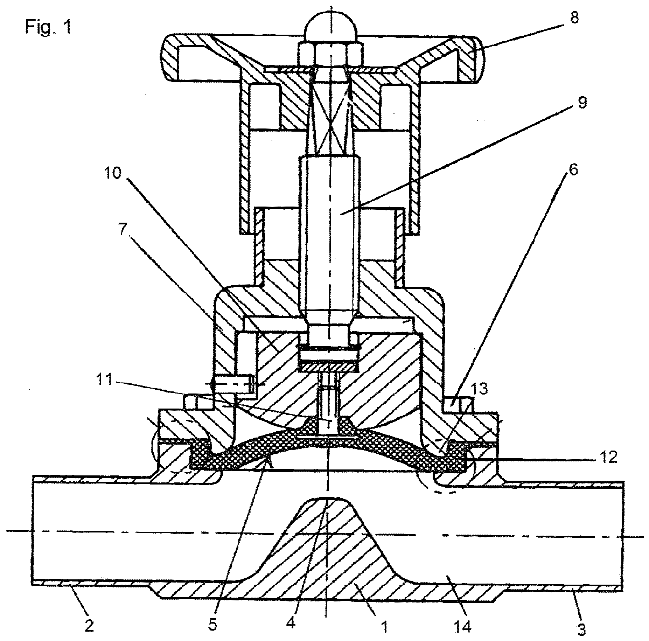

Figur 1 zeigt ein Membranventil, das ein Gehäuseunterteil 1 umfasst, welches Anschlüsse 2, 3 und ein Wehr 4 aufweist. Das Wehr 4 dient als Sitzfläche für die Membran 5. Die Membran 5 ist mithilfe von Verbindungsmitteln 6 eingespannt, die im Ausführungsbeispiel als Schrauben ausgeführt sind. Die Membran 5 ist zwischen dem Gehäuseunterteil 1 und einem Gehäuseoberteil 7 eingespannt. Im Gehäuseoberteil 7 sind die zur Betätigung der Membran 5 notwendigen Elemente integriert, wie beispielsweise ein Antrieb 8, der im Ausführungsbeispiel als Handrad ausgeführt ist, sowie eine Spindel 9. An der Spindel 9 ist ein Druckstück 10 befestigt. Das Druckstück 10 ist verschieblich im Gehäuseoberteil 7 angeordnet und wird von einer inneren Wand des Gehäuseoberteils 7 geführt. Durch Betätigung des Antriebs 8 wird über die Spindel 9 eine horizontale Verschiebung des Druckstücks 10 bewirkt, sodass sich die Membran 5 verformt und der Querschnitt zwischen dem Wehr 4 und der Membran 5 vergrößert bzw. verkleinert werden kann.

In die Membran 5 ist ein stiftartiges Element 11 eingebettet, das im Ausführungsbeispiel als Membranschraube ausgebildet ist.

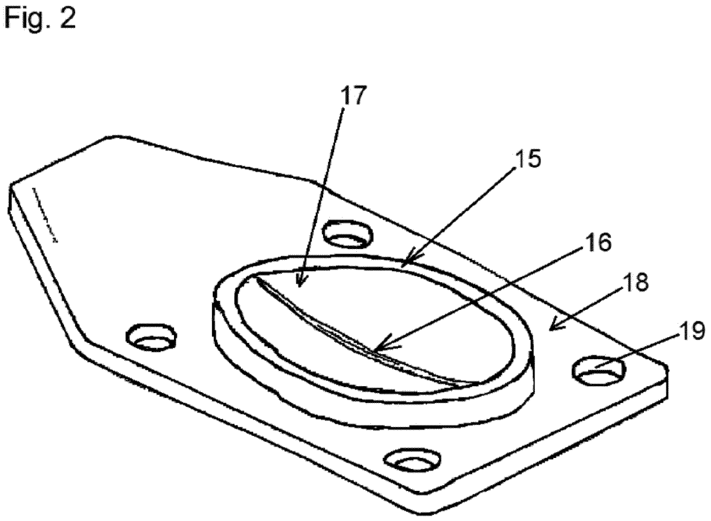

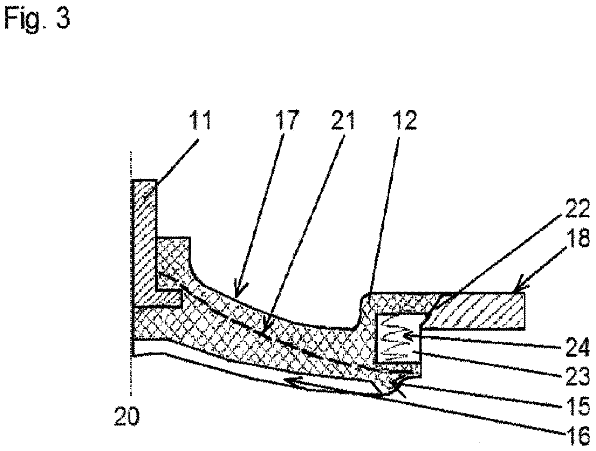

Figur 2 zeigt eine Draufsicht auf eine Membran 5 für einen gekammerten Einsatz. Bei dieser Variante wird durch das Gehäuseunterteil 1 und das Gehäuseoberteil 7 eine Kammer gebildet, die einen Randwulst 12 der Membran 5 aufnimmt. Der Randwulst 12 ist beispielsweise in Figur 3 dargestellt. Die Form und das Volumen des Randwulstes 12 sind so gewählt, dass beim Anziehen der Verbindungsmittel 6 eine Verformung und eine Pressung des Randwulstes 12 innerhalb der Kammer auftritt. Der Randwulst 12 liegt somit fest und dicht an der Wandung der Kammer an.

Mithilfe eines an das Gehäuseoberteil 7 angeformten Kragens 13 wird zwischen der Kammer und dem Gehäuseinneren 14 eine Engstelle gebildet, durch welche ein Herausziehen des Randwulstes 12 aus der Kammer verhindert wird.

Die in Figur 2 dargestellte Membran 5 weist eine umlaufende äußere Dichtlippe 15 auf zur Sicherstellung der Dichtheit des Gehäuses. Weiterhin weist die Membran 5 eine Dichtlippe 16 zur Sicherstellung der Dichtheit im Durchgang auf.

Erfindungsgemäß ist die Membran 5 unterteilt in einen inneren Bereich 17 und einen äußeren Bereich 18. Der innere Bereich 17 ist kreisförmig ausgebildet und umfasst eine zwischen der Dichtlippe 15 gewölbte Fläche sowie die Dichtlippe 16 und die Dichtlippe 15 selbst. Der innere Bereich 17 ist kreisförmig ausgebildet. An den inneren Bereich 17 schließt sich unmittelbar ein äußerer Bereich 18 an. Der äußere Bereich 18 weist Öffnungen 19 zur Durchführung der Verbindungsmittel 6 auf. Der äußere Bereich 18 ist an seinen Rändern mit geraden Kanten ausgebildet und weist dort, wo er zwischen den Gehäuseteilen 1 und 7 eingespannt wird, ein rechteckförmiges Profil auf. Der äußere Bereich 18 ist um den kreisförmigen inneren Bereich 17 angeordnet.

Figur 3 zeigt einen Schnitt durch die in Figur 2 dargestellten Membran 5, wobei gemäß der Darstellung in Figur 3 nur die mit Blick auf die Zeichnung rechte Hälfte der Membran 5 dargestellt ist. Die spiegelsymmetrisch zur Achse 20 gehörende Hälfte ist in Figur 3 nicht dargestellt. Die Achse 20 bildet die spiegelsymmetrische Mittelachse der Membran 5.

Erfindungsgemäß handelt es sich bei der in Figur 3 dargestellten Membran um eine Komposit-Membran mit einem inneren Bereich 17, an den sich ein äußerer Bereich 18 anschließt. Erfindungsgemäß weist der äußere Bereich 18 gegenüber dem inneren Bereich 17 eine größere Härte auf. Der äußere Bereich 18 besteht aus einem anderen Material als der innere Bereich 17. Im Ausführungsbeispiel besteht der innere Bereich 17 aus einem Elastomer.

Bei dem Elastomer handelt es sich um ein Ethylen-Propylen-Dien-Kautschuk (EPDM). Der elastomere innere Bereich 17 umfasst zwei Elastomerlagen, zwischen denen eine Gewebelage 21 angeordnet ist. Der innere Bereich 17 weist eine umlaufende Dichtlippe 15 zur Abdichtung gegenüber den Gehäuseteilen 1 und 7 und eine Dichtlippe 16 auf, die mit dem Sitz 4 des Ventils zusammenwirkt. Die umlaufende Dichtlippe 15 ist ringförmig ausgebildet und weist zur Seite der Dichtlippe 16.

Der äußere Bereich 18 schließt sich unmittelbar an den inneren Bereich 17 an. Die Berührungsfläche 22 zwischen dem inneren Bereich 17 und dem äußeren Bereich 18 ist schräg ausgebildet im Verhältnis zu den Stirnflächen des Gehäuseunterteils 1 und des Gehäuseoberteils zwischen denen die Membran verspannt wird. Die Berührungsfläche 22 verläuft schräg zum Ventilsitz hin. Der innere Bereich 17 ist mit dem äußeren Bereich 18 fest verbunden, beispielsweise über eine Verklebung. Von den Wänden des Innenbereichs 17, des äußeren Bereichs 18 und dem Gehäuseunterteil 1 wird bei dem Ausführungsbeispiel gemäß Figur 3 ein Raum 23 gebildet, in dem ein Federelement 24 angeordnet ist. Bei dem Federelement 24 kann es sich beispielsweise um eine Spiralfeder oder um einen elastischen Körper handeln. Das Federelement 24 dient dem Nachspannen der Membran 5. Das Federelement 24 wirkt Kräfte aus, die senkrecht zu den Stirnflächen der Gehäuseteile 1 und 7 zwischen denen die Membran 5 eingespannt ist.

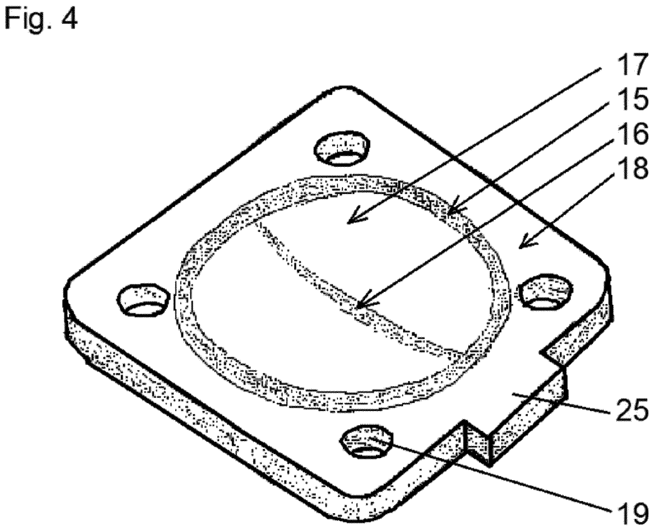

Figur 4 zeigt eine Draufsicht auf eine flache Membran. Die Membran 5 weist eine umlaufende äußere Dichtlippe 15 auf zur Sicherstellung der Dichtheit des Gehäuses. Weiterhin weist die Membran 5 eine Dichtlippe 16 zur Sicherstellung der Dichtheit im Durchgang auf.

Erfindungsgemäß ist die Membran 5 unterteilt in einen inneren Bereich 17 und einen äußeren Bereich 18. Der innere Bereich 17 ist kreisförmig ausgebildet und umfasst eine zwischen der Dichtlippe 15 gewölbte Fläche sowie die Dichtlippe 16 und die Dichtlippe 15 selbst. Der innere Bereich 17 ist kreisförmig ausgebildet. An den inneren Bereich 17 schließt sich unmittelbar ein äußerer Bereich 18 an. Der äußere Bereich 18 weist Öffnungen 19 zur Durchführung der Verbindungsmittel 6 auf. Der äußere Bereich 18 ist an seinen Rändern mit geraden Kanten ausgebildet und weist dort, wo er zwischen den Gehäuseteilen 1 und 7 eingespannt wird, ein rechteckförmiges Profil auf. Der äußere Bereich 18 ist um den kreisförmigen inneren Bereich 17 angeordnet. Der äußere Bereich 18 bildet eine Fahne 25 aus. Diese angeformte Fahne 25 trägt ein Kennzeichen für eine Identifizierung der Membran 5.

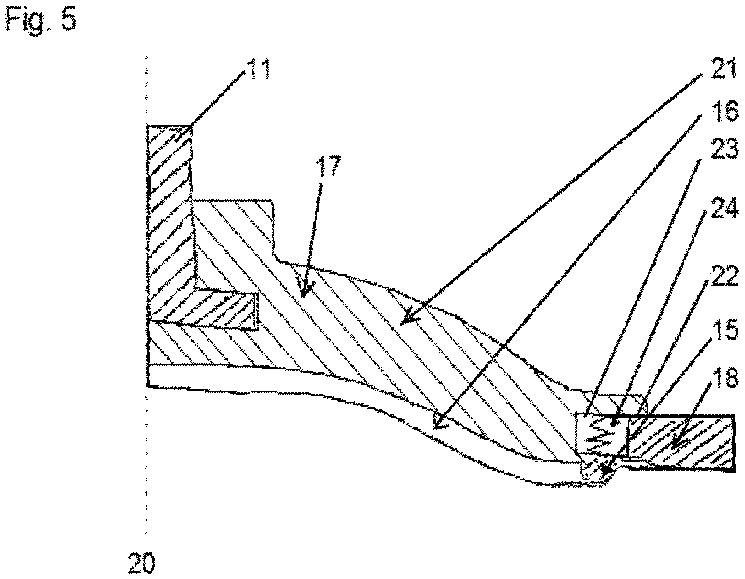

Figur 5 zeigt einen Schnitt durch eine Hälfte der in Figur 4 dargestellten flachen Membran 5, wobei nur die mit Blick auf die Zeichnung rechte Hälfte der Membran dargestellt ist. Die spiegelsymmetrisch zur Achse 20 gehörende Hälfte ist nicht dargestellt. Die Achse 20 bildet die spiegelsymmetrische Mittelachse der Membran 5.

Erfindungsgemäß handelt es sich bei der in Figur 5 dargestellten Membran 5 um eine Komposit-Membran mit einem inneren Bereich 17, an den sich ein äußerer Bereich 18 anschließt. Erfindungsgemäß weist der äußere Bereich 18 gegenüber dem inneren Bereich 17 eine größere Härte auf. Der äußere Bereich 18 besteht aus einem anderen Material als der innere Bereich 17. Im Ausführungsbeispiel besteht der innere Bereich 17 aus einem Elastomer.

Bei dem Elastomer handelt es sich um ein Ethylen-Propylen-Dien-Kautschuk (EPDM). Der elastomere innere Bereich 17 umfasst zwei Elastomerlagen, zwischen denen eine Gewebelage 21 angeordnet ist. Der innere Bereich 17 weist eine umlaufende Dichtlippe 15 zur Abdichtung gegenüber den Gehäuseteilen 1 und 7 und eine Dichtlippe 16 auf, die mit dem Sitz 4 des Ventils zusammenwirkt. Die umlaufende Dichtlippe 15 ist ringförmig ausgebildet und weist zur Seite der Dichtlippe 16.

Der äußere Bereich 18 schließt sich unmittelbar an den inneren Bereich 17 an. Die Berührungsfläche 22 zwischen dem inneren Bereich 17 und dem äußeren Bereich 18 ist parallel zu den Stirnflächen des Gehäuseunterteils 1 und des Gehäuseoberteils 7 ausgebildet zwischen denen die Membran verspannt wird. Der innere Bereich 17 ist mit dem äußeren Bereich 18 fest verbunden, beispielsweise über eine Verklebung.

Ein Raum 23 wird von Wänden des inneren Bereichs 17 und des äußeren Bereichs 18 gebildet. In dem Raum 23 ist in dem ein Federelement 24 angeordnet. Bei dem Federelement 24 kann es sich beispielsweise um eine Spiralfeder oder um einen elastischen Körper handeln. Das Federelement 24 dient dem Nachspannen der Membran 5. Das Federelement 24 wirkt Kräfte aus, die senkrecht zu den Stirnflächen der Gehäuseteile 1 und 7 zwischen denen die Membran 5 eingespannt ist. Der Raum 23 wird ausschließlich gebildet von Wänden des inneren Bereichs 17 und des äußeren Bereichs 18. In den inneren Bereich 17 ist ein stiftartige Element 11 formschlüssig integriert.

## Patentansprüche

1. Membranventil mit einer Membran (5), die Räume voneinander dichtend trennt, wobei die Membran (5) zwischen Gehäuseteilen (1, 7) angeordnet ist, wobei die Membran (5) einen inneren Bereich (17) aufweist, an den sich ein äußerer Bereich (18) anschließt, der eine höhere Härte aufweist, wobei der innere Bereich (17) aus einem elastomeren Werkstoff besteht, wobei der äußere Bereich (18) aus einem thermoplastischen und/oder duroplastischen Werkstoff besteht, wobei die Membran ein Federelement (24) aufweist, wobei das Federelement (24) in einem Raum (23) angeordnet ist, und wobei der Raum (23) zumindest teilweise von den Wänden des inneren Bereichs (17) und/oder Wänden des äußeren Bereichs (18) begrenzt wird, **dadurch gekennzeichnet, dass** die Kräfte des Federelementes (24) senkrecht zu den Stirnflächen der Gehäuseteile (1, 7), zwischen denen die Membran (5) eingespannt ist, auf diese Stirnflächen wirken.

2. Membranventil nach Anspruch 1, **dadurch gekennzeichnet, dass** der innere Bereich (17) eine Härte nach Shore A, vorzugsweise zwischen 55 und 90, aufweist und/oder der äußere Bereich (18) eine Härte nach Shore D, vorzugsweise größer als 50, aufweist.

3. Membranventils nach Anspruch 1 oder 2, **dadurch gekennzeichnet, dass** der innere Bereich (17) ein Elastizitätsmodul von weniger als 45 MPa, vorzugsweise weniger als 35 MPa, insbesondere weniger als 25 MPa und/oder der äußere Bereich (18) ein Elastizitätsmodul von mehr als 300 MPa, vorzugsweise mehr als 400 MPa, insbesondere mehr als 500 MPa aufweist.

4. Membranventil nach einem der Ansprüche 1 bis 3, **dadurch gekennzeichnet, dass** der äußere Bereich (18) mehr als 60 %, vorzugsweise mehr als 70 %, insbesondere mehr als 80 % der Kräfte der Verbindungselemente (6) zwischen den Gehäuseteilen (1, 7) überträgt, zwischen denen die Membran (5) eingespannt ist.

5. Membranventil nach einem der Ansprüche 1 bis 4, **dadurch gekennzeichnet, dass** der äußere Bereich (18) unmittelbar an den inneren Bereich (17) anschließt.

6. Membranventil nach einem der Ansprüche 1 bis 5, **dadurch gekennzeichnet, dass** die Membran (5) eine umlaufende Dichtlippe (15) zur Abdichtung von mindestens einem Gehäuseteil (1, 7) aufweist.

7. Membranventil nach einem der Ansprüche 1 bis 6, **dadurch gekennzeichnet, dass** die Membran (5) eine Dichtlippe (16) zur Abdichtung gegenüber einem Durchgang des Ventils aufweist.

8. Membranventil nach einem der Ansprüche 1 bis 7 **dadurch gekennzeichnet, dass** die Membran (5) einen Randwulst (12) aufweist.

9. Membranventil nach einem der Ansprüche 1 bis 8, **dadurch gekennzeichnet, dass** der innere Bereich (17) und der äußere Bereich (18) miteinander verbunden sind.

10. Membranventil nach einem der Ansprüche 1 bis 9, **dadurch gekennzeichnet, dass** der innere Bereich (17) und der äußere Bereich (18) über schräge Flächen (22) aneinandergrenzen.

11. Membranventil nach einem der Ansprüche 1 bis 10, **dadurch gekennzeichnet, dass** der innere Bereich und der äußere Bereich über senkrechte Flächen (22) aneinandergrenzen.

12. Membranventil nach einem der Ansprüche 1 bis 11, **dadurch gekennzeichnet, dass** der innere und der äußere Bereich über parallele Flächen (22) aneinandergrenzen.

## Claims

1. Diaphragm valve having a diaphragm (5) which sealingly separates spaces from one another, wherein the diaphragm (5) is arranged between housing parts (1, 7), wherein the diaphragm (5) has an inner region (17) which is adjoined by an outer region (18) which has a greater hardness, wherein the inner region (17) consists of an elastomeric material, wherein the outer region (18) consists of a thermoplastic and/or thermosetting material, wherein the diaphragm has a spring element (24), wherein the spring element (24) is arranged in a space (23), and wherein the space (23) is delimited at least partially by the walls of the inner region (17) and/or walls of the outer region (18), **characterized in that** the forces of the spring element (24) act perpendicularly to the end surfaces of the housing parts (1, 7), between which the diaphragm (5) is clamped, on said end surfaces.

2. Diaphragm valve according to Claim 1, **characterized in that** the inner region (17) has a Shore A hardness, preferably between 55 and 90, and/or the outer region (18) has a Shore D hardness, preferably greater than 50.

3. Diaphragm valve according to Claim 1 or 2, **characterized in that** the inner region (17) has a modulus of elasticity of less than 45 MPa, preferably less than 35 MPa, in particular less than 25 MPa, and/or the outer region (18) has a modulus of elasticity of greater than 300 MPa, preferably greater than 400 MPa, in particular greater than 500 MPa.

4. Diaphragm valve according to one of Claims 1 to 3, **characterized in that** the outer region (18) transmits more than 60%, preferably more than 70%, in particular more than 80% of the forces of the connecting elements (6) between the housing parts (1, 7), between which the diaphragm (5) is clamped.

5. Diaphragm valve according to one of Claims 1 to 4, **characterized in that** the outer region (18) directly adjoins the inner region (17).

6. Diaphragm valve according to one of Claims 1 to 5, **characterized in that** the diaphragm (5) has an encircling sealing lip (15) for sealing off at least one housing part (1, 7).

7. Diaphragm valve according to one of Claims 1 to 6, **characterized in that** the diaphragm (5) has a sealing lip (16) for providing sealing with respect to a passage of the valve.

8. Diaphragm valve according to one of Claims 1 to 7, **characterized in that** the diaphragm (5) has an edge bead (12).

9. Diaphragm valve according to one of Claims 1 to 8, **characterized in that** the inner region (17) and the outer region (18) are connected to one another.

10. Diaphragm valve according to one of Claims 1 to 9, **characterized in that** the inner region (17) and the outer region (18) adjoin one another via oblique surfaces (22).

11. Diaphragm valve according to one of Claims 1 to 10, **characterized in that** the inner region and the outer region adjoin one another via vertical surfaces (22) .

12. Diaphragm valve according to one of Claims 1 to 11, **characterized in that** the inner region and the outer region adjoin one another via parallel surfaces (22) .

## Revendications

1. Soupape à membrane dotée d'une membrane (5) qui sépare de manière étanche des chambres les unes par rapport aux autres, la membrane (5) étant disposée entre des parties de corps (1, 7), la membrane (5) présentant une zone intérieure (17) suivie d'une zone extérieure (18) qui présente une dureté plus élevée, la zone intérieure (17) étant composée d'un matériau élastomère, la zone extérieure (18) étant composée d'un matériau thermoplastique et/ou thermodurcissable, la membrane présentant un élément faisant ressort (24), l'élément faisant ressort (24) étant disposé dans une chambre (23), et la chambre (23) étant limitée au moins en partie par les parois de la zone intérieure (17) et/ou les parois de la zone extérieure (18),
**caractérisée en ce que** les forces de l'élément faisant ressort (24) agissent sur les surfaces frontales perpendiculairement à ces surfaces frontales des parties de corps (1, 7) entre lesquelles est tendue la membrane (5).

2. Soupape à membrane selon la revendication 1, **caractérisée en ce que** la zone intérieure (17) présente une dureté Shore A, de préférence comprise entre 55 et 90, et/ou la zone extérieure (18) présente une dureté Shore D, de préférence supérieure à 50.

3. Soupape à membrane selon la revendication 1 ou 2, **caractérisée en ce que** la zone intérieure (17) présente un module d'élasticité inférieur à 45 MPa, de préférence inférieur à 35 MPa, en particulier inférieur à 25 MPa, et/ou la zone extérieure (18) présente un module d'élasticité supérieur à 300 MPa, de préférence supérieur à 400 MPa, en particulier supérieur à 500 MPa.

4. Soupape à membrane selon l'une quelconque des revendications 1 à 3, **caractérisée en ce que** la zone extérieure (18) transmet plus de 60 %, de préférence plus de 70 %, en particulier plus de 80 % des forces des éléments de liaison (6) entre les parties de corps (1, 7) entre lesquelles est tendue la membrane (5).

5. Soupape à membrane selon l'une quelconque des revendications 1 à 4, **caractérisée en ce que** la zone extérieure (18) est directement contigüe à la zone intérieure (17).

6. Soupape à membrane selon l'une quelconque des revendications 1 à 5, **caractérisée en ce que** la membrane (5) présente une lèvre d'étanchéité périphérique (15) pour rendre étanche au moins une partie de corps (1, 7).

7. Soupape à membrane selon l'une quelconque des revendications 1 à 6, **caractérisée en ce que** la membrane (5) présente une lèvre d'étanchéité (16) pour assurer l'étanchéité par rapport à un passage de la soupape.

8. Soupape à membrane selon l'une quelconque des revendications 1 à 7, **caractérisée en ce que** la membrane (5) présente un bourrelet marginal (12).

9. Soupape à membrane selon l'une quelconque des revendications 1 à 8, **caractérisée en ce que** la zone intérieure (17) et la zone extérieure (18) sont reliées l'une à l'autre.

10. Soupape à membrane selon l'une quelconque des revendications 1 à 9, **caractérisée en ce que** la zone intérieure (17) et la zone extérieure (18) sont adjacentes par des surfaces inclinées (22).

11. Soupape à membrane selon l'une quelconque des revendications 1 à 10, **caractérisée en ce que** la zone intérieure et la zone extérieure sont adjacentes par des surfaces verticales (22).

12. Soupape à membrane selon l'une quelconque des revendications 1 à 11, **caractérisée en ce que** la zone intérieure et la zone extérieure sont adjacentes par des surfaces parallèles (22).
